(19) Europäisches Patentamt
European Patent Office
Office européen des brevets

(11) **EP 3 712 477 B1**

(12) **EUROPÄISCHE PATENTSCHRIFT**

(45) Veröffentlichungstag und Bekanntmachung des Hinweises auf die Patenterteilung:
**12.10.2022 Patentblatt 2022/41**

(21) Anmeldenummer: **20162314.7**

(22) Anmeldetag: **11.03.2020**

(51) Internationale Patentklassifikation (IPC):
**F16K 37/00** *(2006.01)* **F15B 13/00** *(2006.01)*

(52) Gemeinsame Patentklassifikation (CPC):
**F16K 37/005; F15B 5/006;** F15B 13/025;
F15B 2211/6313; F15B 2211/6656; F15B 2211/857;
F15B 2211/8855

(54) **VORRICHTUNG, REIHENANORDNUNG UND VERFAHREN**

DEVICE, ROW ARRANGEMENT AND METHOD

DISPOSITIF, AGENCEMENT EN SÉRIE ET PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.03.2019 DE 102019203937**

(43) Veröffentlichungstag der Anmeldung:
**23.09.2020 Patentblatt 2020/39**

(73) Patentinhaber: **Festo SE & Co. KG**
**73734 Esslingen (DE)**

(72) Erfinder:
• **Szili, Tamas**
**73730 Esslingen (DE)**
• **Müller, Sebastian**
**70563 Stuttgart (DE)**
• **Grün, Andreas**
**73760 Ostfildern (DE)**

(74) Vertreter: **Patentanwälte Magenbauer & Kollegen Partnerschaft mbB**
**Plochinger Straße 109**
**73730 Esslingen (DE)**

(56) Entgegenhaltungen:
**EP-A1- 1 988 369 DE-U1- 29 721 502**
**US-A- 3 643 682 US-A1- 2009 122 831**

• **Emerson Electric Co.: "Pressure Control, Pressure Regulator | Aventics EV03", , 21. März 2019 (2019-03-21), XP055718943, Gefunden im Internet: URL:https://www.aventics.com/en/products/pneumatic-products/pressure-regulators/ep-pressure-regulators/series-ev03/?no_cache=1&cHash=07976d31ab17dba7f7b1ccb05421aa88 [gefunden am 2020-07-29]**
• **Aventics: "Druckregelventil und Grundplatte Pressure", , 30 September 2015 (2015-09-30), XP055812770, Retrieved from the Internet: URL:https://www.emerson.com/documents/automation/instruction-manual-pressure-regulator-base-plate-av-ep-aventics-en-6899540.pd f [retrieved on 2021-06-10]**

**Beschreibung**

Die Erfindung betrifft eine Vorrichtung für die Industrieautomatisierung. Die Vorrichtung umfasst ein Gehäuse und eine in dem Gehäuse angeordnete Ventileinheit, die als pneumatisches Proportionalventil ausgebildet ist. Die Vorrichtung ist zweckmäßigerweise als Ventilvorrichtung ausgebildet. Die Vorrichtung umfasst eine am Gehäuse angeordnete Anzeigeeinrichtung zur Anzeige einer Zustandsinformation über die Ventileinheit. Die Vorrichtung, insbesondere die Ventilvorrichtung, ist insbesondere ausgebildet, einen Istwert, beispielsweise eines Drucks, auf einen vorgegebenen Sollwert zu regeln.

Aktuell auf dem Markt befindliche Ventilvorrichtungen verfügen über eine Anzeigeeinrichtung, beispielsweise eine 7-Segment-Anzeige oder eine LED-Anzeige, mit der als Zustandsinformation beispielsweise der momentane Istwert des Drucks angezeigt wird. Es sind insbesondere Ventilvorrichtungen erhältlich, die auf ihrer Anzeigeeinrichtung ein Verhältnis des Istwerts des Drucks zum maximal möglichen Druck (nachfolgend auch als Maximaldruck bezeichnet) grafisch darstellen. Rein exemplarisch sei an dieser Stelle das Ventil EV03 der Aventics GmbH genannt.

Die DE 297 21 502 U1 beschreibt eine Strangregulierarmatur zur Einstellung von Volumenströmen in Rohrleitungen, insbesondere in Rohrleitungen von Versorgungssystemen. Eine Anzeigeeinheit verfügt zur Einstellung des Volumenstromes über Kontrolllampen von unterschiedlicher Kennung oder Farbe. Bei Verwendung von Leuchtdioden unterschiedlicher Farbe können rote Leuchtdioden unzulässige Volumenströme anzeigen, während eine grüne Leuchtdiode für den zulässigen Volumenstrom benutzt wird.

Die EP 1 988 369 A1 beschreibt eine Vorrichtung zum Anzeigen von Messwerten, wobei ein Istwert und ein vorgegebener Sollwert derart dargestellt werden, dass die Position des Istwerts relativ zu dem Sollwert eine Funktion der Differenz zwischen dem Sollwert und dem Istwert ist.

Die US 2009/0122831 A1 betrifft eine intelligente Fluss/Temperatur-Messvorrichtung.

Die US 3,643,682 betrifft ein Fluiddruckkontrollsystem. Eine Reihe von vorgesteuerten Ablassventilen mit individuellen Umgehungsventilen sind in einem Leiter-Netzwerk mit einem Ablass verbunden.

Eine Aufgabe der Erfindung besteht darin, die eingangs genannte Vorrichtung so zu modifizieren, dass sich ein Benutzer in schneller und einfacher Weise darüber informieren kann, wie gut die Ventileinheit aktuell funktioniert.

Die Aufgabe wird gelöst durch eine Vorrichtung gemäß Anspruch 1. Die Vorrichtung ist ausgebildet, auf Basis eines mit der Ventileinheit im Zusammenhang stehenden Sollwerts und eines mit der Ventileinheit im Zusammenhang stehenden Istwerts einen Abweichungswert bereitzustellen und gemäß dem Abweichungswert einen Abweichungsindikator auf der Anzeigeeinrichtung anzuzeigen, wobei

- der Abweichungsindikator einen Balken umfasst, dessen Größe von dem Abweichungswert abhängt, wobei sich der Balken abhängig vom Vorzeichen des Abweichungswerts nach rechts oder nach links erstreckt, oder

- der Abweichungsindikator ein Sollwert-Grafikelement und ein als Marker ausgebildetes Abweichungs-Grafikelement umfasst, wobei, wenn der Istwert kleiner ist als der Sollwert, der Marke links von dem Sollwert-Grafikelement angezeigt wird, und, wenn der Istwert größer als der Sollwert ist, der Marker rechts von dem Sollwert-Grafikelement angezeigt wird.

Anhand des angezeigten Abweichungsindikators kann der Benutzer schnell und einfach erfassen, wie gut die Ventileinheit den Istwert auf den Sollwert regelt. Der Benutzer kann sich somit in schneller und einfacher Weise darüber informieren, wie gut die Ventileinheit aktuell funktioniert.

Gegenüber den vorstehend erwähnten Ventilvorrichtungen, die ein Verhältnis zwischen Ist-Druck und Maximaldruck anzeigen, wird insbesondere der Vorteil erzielt, dass über den Abweichungsindikator auch Störungen und/oder Regelcharakteristiken der Ventileinheit feststellbar sind, die aus dem Verhältnis aus Ist-Druck und Maximaldruck nicht hervorgehen. So sind z.B. Fälle, in denen sich der Sollwert ändert aber der Istwert nicht schnell genug nachgeführt wird, über die erwähnte konventionelle Anzeige des Verhältnisses aus Istwert und Maximalwert nicht ersichtlich. Mittels des Abweichungsindikators können diese Fälle jedoch schnell und einfach vom Benutzer erfasst werden.

Die Erfindung betrifft ferner eine Reihenanordnung, umfassend eine Mehrzahl von in einer Aufreihungsrichtung aufgereihten, mechanisch und/oder fluidisch miteinander gekoppelten Vorrichtungen gemäß einer vorstehend beschriebenen Ausgestaltung.

Die Erfindung betrifft ferner ein Verfahren zum Betrieb einer vorstehend beschriebenen Vorrichtung, umfassend die Schritte: Bereitstellen des Abweichungswerts auf Basis des mit der Ventileinheit im Zusammenhang stehenden Sollwerts und des mit der Ventileinheit im Zusammenhang stehenden Istwerts und Anzeigen, auf der Anzeigeeinrichtung, des Abweichungsindikators gemäß dem Abweichungswert. Das Verfahren ist zweckmäßigerweise gemäß einer hier beschriebenen Ausgestaltung der Vorrichtung weitergebildet.

Nachstehend werden exemplarische Ausführungsformen unter Bezugnahme auf die Figuren erläutert. Dabei zeigt

Figur 1    eine perspektivische Ansicht einer exemplarischen Vorrichtung,

Figur 2    eine erste exemplarische Ausführung einer Anzeige mit einem Abweichungsindikator,

Figur 3    eine zweite exemplarische Ausführung einer Anzeige mit einem Abweichungsindikator und

Figur 4    eine Ansicht von oben auf eine Reihenanordnung.

Bei der nachfolgenden Erläuterung wird auf die orthogonal zueinander ausgerichteten Raumrichtungen "x-Richtung", "y-Richtung" und "z-Richtung" Bezug genommen. Die x-Richtung und die "y-Richtung können auch als Horizontalrichtungen und die z-Richtung als Vertikalrichtung oder Höhenrichtung bezeichnet werden. Das Bezugssystem für die Raumrichtungen und andere räumliche Angaben wie "oben" oder "unten" ist die Vorrichtung 10 selbst. Bei einer relativ zur Umgebung gedrehten Vorrichtung 10 dreht sich das Bezugssystem und die damit zusammenhängenden räumlichen Angaben mit.

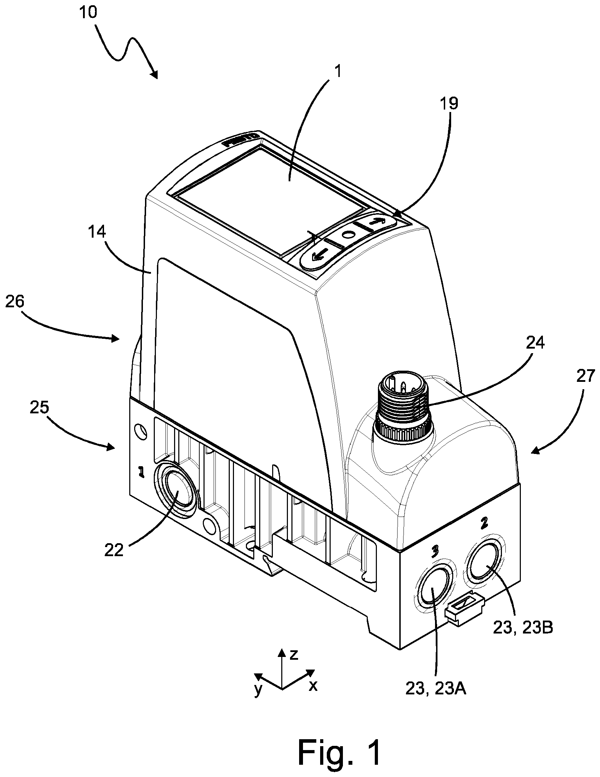

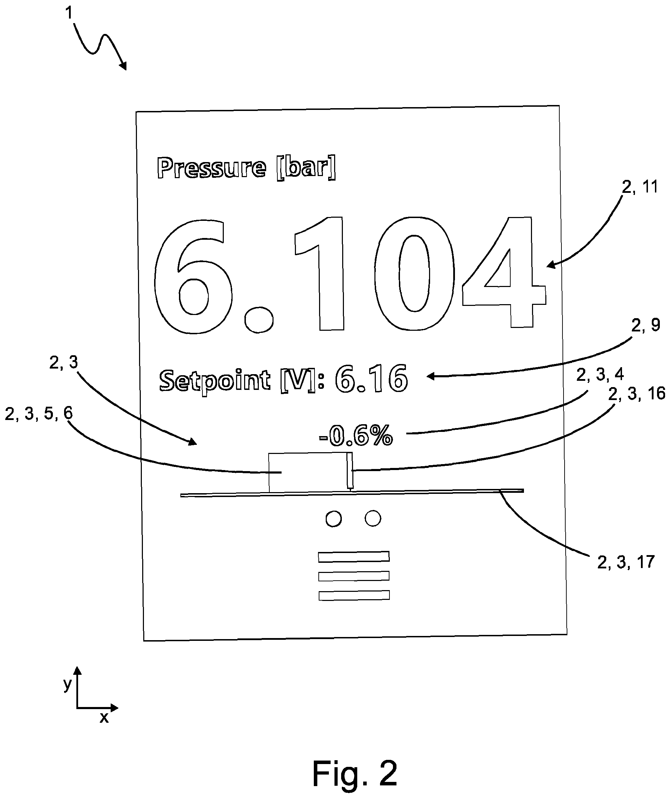

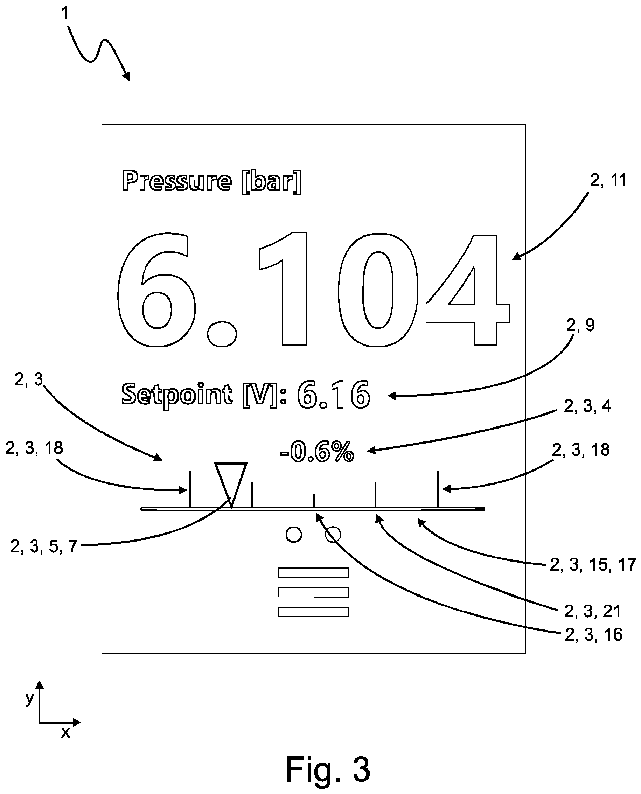

Die Figur 1 zeigt eine Vorrichtung 10. Die Vorrichtung 10 ist exemplarisch als Ventilvorrichtung mit einer Ventileinheit ausgebildet. Die Vorrichtung 10 umfasst eine Anzeigeeinrichtung 1 zur Anzeige einer Zustandsinformation 2 über die Ventileinheit. Die Zustandsinformation 2 ist exemplarisch in den Figuren 2 und 3 gezeigt.

Die Vorrichtung 10 ist ausgebildet, auf Basis eines mit der Ventileinheit im Zusammenhang stehenden Sollwerts und eines mit der Ventilinformation im Zusammenhang stehenden Istwerts einen Abweichungswert bereitzustellen und gemäß dem Abweichungswert einen Abweichungsindikator 3 auf der Anzeigeeinrichtung 1 anzuzeigen. Der Abweichungsindikator 3 ist exemplarisch in den Figuren 2 und 3 gezeigt.

Nachfolgend werden weitere exemplarisch Details erläutert.

Bei der Vorrichtung 10 handelt es sich vorzugsweise um ein Feldgerät, insbesondere um eine Ventileinrichtung. Die Vorrichtung 10 dient insbesondere für den Einsatz in der Feldebene. Zweckmäßigerweise ist die Vorrichtung 10 für die Industrieautomatisierung, insbesondere die Prozessautomatisierung und/oder die Fabrikautomatisierung ausgebildet.

Die Vorrichtung 10 umfasst zweckmäßigerweise eine Ventileinheit. Vorzugsweise umfasst die Vorrichtung 10 ein Proportionalventil, insbesondere ein pneumatisches Proportionalventil. Die Vorrichtung 10 ist ausgebildet, mit dem pneumatischen Proportionalventil einen Istwert auf einen Sollwert zu regeln. Bei dem Sollwert handelt es sich insbesondere um einen Sollwert für einen von der Ventileinheit bereitgestellten Druck. Der Sollwert soll nachstehend auch als Druck-Sollwert bezeichnet werden. Bei dem Istwert handelt es sich insbesondere um den von der Ventileinheit bereitgestellt Druck, beispielsweise einen Ausgangsdruck. Der Istwert soll nachstehend auch als Druck-Istwert bezeichnet werden. Die Ventileinheit ist zweckmäßigerweise ausgebildet, eine Regelung durchzuführen, bei der die Ventileinheit den Istwert auf den Sollwert regelt. Exemplarisch ist die Ventileinheit ausgebildet, den Istwert unter Berücksichtigung eines erfassten Sensorwerts, beispielsweise eines Drucksensorwerts, bereitzustellen. Zweckmäßigerweise umfasst die Ventileinheit einen Sensor, beispielsweise einen Drucksensor, zur Erfassung des Sensorwerts. Alternativ dazu kann der Sensor, mit dem der Sensorwert erfasst wird, auch extern zu der Ventileinheit oder der Vorrichtung 10 angeordnet sein.

Die Vorrichtung 10 ist zweckmäßigerweise derart dimensioniert, dass sie von einem Benutzer manuell getragen werden kann, insbesondere mit einer Hand. Zweckmäßigerweise ist die Vorrichtung 10 als Einheit handhabbar. Exemplarisch umfasst die Vorrichtung 10 ein Gehäuse 14, bei dem es sich insbesondere um das Außengehäuse der Vorrichtung 10 handelt. Vorzugsweise sind sämtliche Bestandteile der Vorrichtung 10 in oder an dem Gehäuse 14 angeordnet.

Die Vorrichtung 10 umfasst zweckmäßigerweise einen oder mehrere fluidische Anschlüsse. Exemplarisch umfasst die Vorrichtung 10 einen fluidischen Versorgungsanschluss 22 und/oder einen oder mehrere fluidische Arbeitsanschlüsse 23. Die Arbeitsanschlüsse 23 umfassen exemplarisch einen Entlüftungsanschluss 23A und/oder einen Belüftungsanschluss 23B. Über den fluidischen Versorgungsanschluss 22 wird der Vorrichtung 10 ein Druckfluid, beispielsweise Druckluft, zugeführt. An einem fluidischen Arbeitsanschluss 23, insbesondere dem Belüftungsanschluss 23B, stellt die Vorrichtung 10 einen Ausgangsdruck gemäß dem vorgegebenen Sollwert bereit.

Die Vorrichtung 10 umfasst ferner eine elektrische Schnittstelle 24. Die elektrische Schnittstelle 24 dient insbesondere dazu, ein elektrisches Eingangssignal zu empfangen, mit dem beispielsweise der Sollwert vorgegeben wird. Gemäß einer exemplarischen (in den Figuren nicht gezeigten) Ausgestaltung wird eine Anordnung bereitgestellt, die die Vorrichtung 10 und eine übergeordnete Steuerung, beispielsweise eine SPS, speicherprogrammiere Steuerung, umfasst. Die übergeordnete Steuerung ist mit der Vorrichtung 10 kommunikativ verbunden, insbesondere über die elektrische Schnittstelle 24. Die Vorrichtung 10 empfängt von der übergeordneten Steuerung das elektrische Eingangssignal, das den Sollwert vorgibt, und regelt ihren Ausgangsdruck gemäß dem Sollwert.

Die Vorrichtung 10 umfasst zweckmäßigerweise eine (in den Figuren nicht gezeigte) Verarbeitungseinheit. Die Vorrichtung 10 ist insbesondere ausgebildet, mittels der Verarbeitungseinheit den Abweichungswert auf Basis des Sollwerts und des Istwerts bereitzustellen. Die Verarbeitungseinheit ist beispielsweise als Mikrocontroller, FPGA und/oder ASIC ausgeführt.

Zweckmäßigerweise ist die Vorrichtung 10, insbesondere die Verarbeitungseinheit, ausgebildet, den Abweichungswert auf Basis des Sollwerts und des Istwerts zu berechnen. Beispielsweise ist die Vorrichtung 10, insbesondere die Verarbeitungseinheit, ausgebildet, den Abweichungswert auf Basis einer Differenz zwischen dem Sollwert und dem Istwert bereitzustellen. Gemäß einer möglichen Ausgestaltung ist der Abweichungswert die Differenz zwischen dem Sollwert und dem Istwert.

Zweckmäßigerweise ist die Vorrichtung 10, insbesondere die Verarbeitungseinheit, ausgebildet, den Abweichungswert auf Basis eines Maximalwerts (also eines maximal möglichen Werts) für den Istwert und/oder den Sollwert bereitzustellen. Beispielsweise ist die Vorrichtung 10 ausgebildet, den Abweichungswert als das Verhältnis der vorgenannten Differenz zwischen Sollwert und Istwert zu dem Maximalwert bereitzustellen, insbesondere zu berechnen; also beispielsweise als:

$$\text{Abweichungswert} = (\text{Istwert} - \text{Sollwert}) / \text{Maximalwert}$$

Zweckmäßigerweise ist die Vorrichtung 10, insbesondere die Verarbeitungseinheit, ausgebildet, den Abweichungswert als Regelgüte bereitzustellen.

Exemplarisch betreffen der Sollwert und der Istwert einen Druck, insbesondere den von der Ventilvorrichtung bereitgestellten Ausgangsdruck. Alternativ oder zusätzlich dazu können der Sollwert und der Istwert auch eine andere Größe, insbesondere einen Durchfluss, einen Hub und/oder eine Kraft betreffen. Zweckmäßigerweise steht die andere Größe, insbesondere der Durchfluss, der Hub und/oder die Kraft im Zusammenhang mit der Ventilvorrichtung.

Gemäß einer möglichen (in den Figuren nicht gezeigten) Ausgestaltung ist die Vorrichtung ausgebildet, zwei oder mehr Abweichungswerte bereitzustellen, wobei jeder Abweichungswert eine andere Größe, insbesondere eine aus den vorgenannten Größen, betrifft. Gemäß dieser Ausgestaltung ist die Vorrichtung zweckmäßigerweise ausgebildet, auf der Anzeigeeinrichtung 1 mehrere Abweichungsindikatoren anzuzeigen, wobei zweckmäßigerweise jeder Abweichungsindikator auf einem anderen Abweichungswert, also einer anderen Größe, basiert.

Die Vorrichtung 10, insbesondere das Gehäuse 14, weist zweckmäßigerweise eine quaderförmige und/oder scheibenförmige Grundgestalt auf. Die x-Erstreckung ist zweckmäßigerweise kleiner als die y-Erstreckung und/oder kleiner als die z-Erstreckung. Die Vorrichtung 10 verfügt über zwei senkrecht zur x-Richtung ausgerichtete Längsseiten, die zweckmäßigerweise im Wesentlichen planar ausgeführt sind. Zweckmäßigerweise kann an jeder Längsseite eine weitere Vorrichtung 10 mechanisch und/oder fluidisch angekoppelt werden, um so eine Reihenanordnung 20 zu bilden. Die Vorrichtung 10 ist exemplarisch als Reihenmodul ausgebildet.

Zweckmäßigerweise ist der fluidische Versorgungsanschluss 22 an einer Längsseite angeordnet. Die Vorrichtung 10 verfügt ferner über zwei senkrecht zur "y-Richtung ausgerichtete Stirnseiten. Exemplarisch sind die beiden fluidische Arbeitsanschlüsse 23 an einer Stirnseite angeordnet.

Die Vorrichtung 10 umfasst einen unteren Abschnitt 25, auf dem zweckmäßigerweise in "y-Richtung nebeneinander ein oberer Abschnitt 26 und ein Schulterabschnitt 27 angeordnet sind. Exemplarisch sind an dem unteren Abschnitt 25 die fluidischen Anschlüsse 22, 23, an dem Schulterabschnitt 27 die elektrische Schnittstelle 24 und/oder an dem oberen Abschnitt 25 die Anzeigeeinrichtung 1 angeordnet.

Die Vorrichtung 10 umfasst zweckmäßigerweise eine Bedieneinrichtung 19, die vorzugsweise eine oder mehrere Tasten umfasst. Exemplarisch umfasst die Bedieneinrichtung 19 drei Tasten. Die Bedieneinrichtung 19 ist exemplarisch an dem oberen Abschnitt 26 angeordnet, insbesondere auf der Oberseite der Vorrichtung 10, vorzugsweise neben der Anzeigeeinrichtung 1. Exemplarisch ist die Bedieneinrichtung 19 in "y-Richtung neben der Anzeigeeinrichtung 1 angeordnet.

Die Ventileinheit ist in dem Gehäuse 14 angeordnet. Die Anzeigeeinrichtung 1 ist zweckmäßigerweise außen an dem Gehäuse 14 angeordnet. Exemplarisch ist die Anzeigeeinrichtung 1 an der Oberseite des Gehäuses 14, insbesondere der Oberseite des oberen Abschnitts 26, angeordnet. Die Oberseite ist exemplarisch normal zur z-Richtung ausgerichtet.

Bei der Anzeigeeinrichtung 1 handelt es sich insbesondere um eine grafische Anzeige, die vorzugsweise Zahlenelemente und/oder Grafikelemente darstellen kann. Als Zahlenelemente sollen Schriftzeichen, insbesondere Zahlzeichen bezeichnet werden, mit denen eine Zahl dargestellt wird. Mit einem Grafikelement (beispielsweise dem Abweichungs-Grafikelement) soll ein von der Anzeigeeinrichtung 1 angezeigtes Element gemeint sein, das keine Zahl, keine Ziffer und/oder kein Buchstabe ist, enthält und/oder bildet. Ein Grafikelement enthält insbesondere kein Zahlenelement und/oder Zahlzeichen. Ein Grafikelement ist insbesondere ein nicht-numerisches Element. Vorzugsweise ist ein Grafikelement ziffernlos. Zweckmäßigerweise ist ein Grafikelement eine geometrische Figur, beispielsweise ein Rechteck.

Die Anzeigeeinrichtung 1 verfügt zweckmäßigerweise über eine Vielzahl an Pixeln, beispielsweise mehr als 100 Pixel. Die Anzeigeeinrichtung 1 ist zweckmäßigerweise ausgebildet, die Zahlenelemente und/oder Grafikelemente, insbesondere das Abweichungs-Grafikelement 5, durch Ansteuerung der Pixel darzustellen. Zweckmäßigerweise wird jedes Zahlenelement und/oder jedes Grafikelement, insbesondere das Abweichungs-Grafikelement 5, jeweils durch eine Vielzahl von Pixeln, insbesondere wenigstens 10 Pixeln, dargestellt.

Die Anzeigeeinrichtung 1 liegt exemplarisch in einer x-y-Ebene. Zweckmäßigerweise ist die Anzeigeeinrichtung 1 rechteckig ausgeführt, wobei die y-Erstreckung der Anzeigeeinrichtung 1 vorzugsweise größer ist als die x-Erstreckung.

Die Anzeigeeinrichtung 1 ist zweckmäßigerweise ausgebildet, verschiedene Anzeigen anzuzeigen. Eine Anzeige kann auch als Seite oder Ansicht bezeichnet werden. Exemplarisch kann über die Bedieneinrichtung 19 zwischen verschiedenen Anzeigen gewechselt werden.

Zweckmäßigerweise ist die Anzeigeeinrichtung 1 ausgebildet, eine Standardansicht oder Hauptansicht anzuzeigen. Die Standardansicht oder Hauptansicht ist insbesondere diejenige Ansicht, die im Betrieb standardmäßig angezeigt wird, insbesondere nach dem Einschalten der Vorrichtung 10 und/oder ohne Betätigung der Bedieneinrichtung 19. Vorzugsweise umfasst die Standardansicht oder Hauptansicht den Abweichungsindikator 3.

Nachstehend soll unter Bezugnahme auf die Figur 2 auf eine erste exemplarische Ausgestaltung einer Ansicht, insbesondere der Hauptansicht, der Anzeigeeinrichtung 1 eingegangen werden.

Auf der Anzeigeeinrichtung wird eine Zustandsinformation 2 angezeigt. Exemplarisch umfasst die Zustandsinformation 2 eine Darstellung des Sollwerts und/oder des Istwerts. Der Sollwert wird exemplarisch als Sollwert-Zahlenelement 9 - also mittels Schriftzeichen, insbesondere Zahlzeichen - dargestellt. Der Istwert wird exemplarisch als Istwert-Zahlenelement 11 - also mittels Schriftzeichen, insbesondere Zahlzeichen - dargestellt. Alternativ oder zusätzlich dazu können der Sollwert und/oder der Istwert auch als Grafikelement dargestellt werden.

Die Zustandsinformation 2 umfasst ferner den nachstehend noch näher erläuterten Abweichungsindikator 3.

Die Vorrichtung 10 ist zweckmäßigerweise ausgebildet, die angezeigte Zustandsinformation 2 - also den angezeigten Sollwert, Istwert und/oder den Abweichungsindikator 3 - gemäß dem zugrundeliegenden Sollwert, Istwert und/oder Abweichungswert aktuell zu halten, insbesondere kontinuierlich zu aktualisieren, zweckmäßigerweise in Echtzeit anzuzeigen. Zweckmäßigerweise entspricht die angezeigte Zustandsinformation, insbesondere der angezeigte Sollwert, Istwert und/oder der Abweichungsindikator 3 - stets dem aktuellen Wert der zugrunde liegenden (insbesondere physikalischen) Größe.

Nachstehend soll näher auf den Abweichungsindikator 3 eingegangen werden.

Exemplarisch zeigt der insbesondere als Graph ausgeführte Abweichungsindikator 3 eine Abweichung eines Drucks an. Alternativ oder zusätzlich dazu kann der Abweichungsindikator 3 ferner eine Abweichung einer anderen physikalischen Regelgröße anzeigen, z.B. eines Durchflusses, eines Hubs und/oder einer Kraft. Optional zeigt der Abweichungsindikator 3 eine Abweichung einer Regelgröße an, die über einen Sensor, z.B. einen Kraftsensor, in einen internen Regelkreis der Ventileinheit eingebunden ist.

Der Abweichungsindikator 3 umfasst exemplarisch ein Abweichungs-Grafikelement 5. Die Größe, Farbe, Form und/oder Position des Abweichungs-Grafikelements 5 hängt von dem Abweichungswert ab. Die Vorrichtung 10 ist also ausgebildet, das Abweichungs-Grafikelement 5, insbesondere dessen Größe, Farbe, Form und/oder Position in Abhängigkeit von dem Abweichungswert darzustellen. Das Abweichungs-Grafikelement 5 umfasst insbesondere kein Schriftzeichen, insbesondere kein Zahlzeichen. Zweckmäßigerweise ist die Vorrichtung 10 ausgebildet, den Abweichungswert auf die Größe, Farbe, Form und/oder Position des Abweichungs-Grafikelements 5 abzubilden. Insbesondere ist die Vorrichtung 10 ausgebildet, eine Mehrzahl (insbesondere wenigstens fünf oder wenigstens zehn) verschiedener Werte des Abweichungswerts auf eine Mehrzahl (insbesondere wenigstens fünf oder wenigstens zehn) verschiedener Größen, Farben, Formen und/oder Positionen des Abweichungs-Grafikelements 5 abzubilden. Die Vorrichtung 10 ist insbesondere ausgebildet, den Abweichungswert wertkontinuierlich auf die Größe, Farbe, Form und/oder Position des Abweichungs-Grafikelements 5 abzubilden. Die Vorrichtung 10 ist insbesondere ausgebildet, mittels des Abweichungs-Grafikelements 5, insbesondere mittels der Größe, Farbe, Form und/oder Position des Abweichungs-Grafikelements 5, eine Mehrzahl (insbesondere wenigstens fünf oder wenigstens zehn) von verschiedenen Werten des Abweichungswerts visuell unterscheidbar darzustellen. Alternativ oder zusätzlich zu dem Abweichungs-Grafikelement 5 umfasst der Abweichungsindikator 3 ein Abweichungs-Zahlenelement 4 - also ein oder mehrere Schriftzeichen, insbesondere Zahlzeichen. Exemplarisch ist das Abweichungs-Zahlenelement 4 eine Zahl, die gleich dem von der Verarbeitungseinheit bereitgestellten Abweichungswert, insbesondere gleich dem aktuellen Abweichungswert ist. Der Abweichungsindikator 3 ist insbesondere als Abweichungsgraph oder Abweichungsdiagramm ausgeführt. In der Figur 2 ist der Abweichungsindikator 3 exemplarisch als Balkengraph ausgeführt. Der Abweichungsindikator kann hier auch als Balkendiagramm bezeichnet werden. Exemplarisch umfasst der Abweichungsindikator 3 einen Balken 6, dessen Größe, insbesondere dessen x-Erstreckung, von dem Abweichungswert abhängt. Bei dem Balken 6 handelt es sich um eine exemplarische Ausgestaltung des vorstehend erwähnten Abweichungs-Grafikelements 5.

Exemplarisch ist die Vorrichtung 10 ausgebildet, die Länge, insbesondere die x-Erstreckung, des Balkens 6 gemäß dem Abweichungswert anzupassen, insbesondere in Echtzeit. Erfindungsgemäß wird der Abweichungswert auf diese Länge des Balkens 6 abgebildet, so dass diese Länge des Balkens 6 proportional zum Abweichungswert ist. Die Vorrichtung 10 ist insbesondere ausgebildet, den Abweichungswert auf die Länge des Balkens 6 abzubilden, insbesondere wertkontinuierlich. Exemplarisch wird ein (in x-Richtung befindliches) erstes Ende des Balkens 6 fixiert - also ständig an der gleichen Position - dargestellt, exemplarisch in einem zentralen x-Bereich der Anzeigeeinrichtung 1, und die Position eines zweiten Endes des Balkens 6 wird gemäß dem Abweichungswert angepasst, insbesondere in Echtzeit. Erfindungsgemäß erstreckt sich der Balken 6 abhängig vom Vorzeichen des Abweichungswert nach rechts oder nach links. Erfindungsgemäß wird das zweite Ende des Balkens 6 bei einem negativen Abweichungswert links von dem ersten Ende des Balkens 6 dargestellt, so dass sich der Balken 6 nach links erstreckt. Ferner wird das zweite Ende des Balkens 6 bei einem positiven Abweichungswert rechts von dem ersten Ende des Balkens 6 dargestellt, so dass sich der Balken 6 nach rechts erstreckt. Zweckmäßigerweise wird die Länge des Balkens 6 ständig aktualisiert, so dass der Balken 6 bei sich änderndem Abweichungswert als animiertes Grafikelement dargestellt wird.

Exemplarisch umfasst der Abweichungsindikator 3 ferner ein Sollwert-Grafikelement 16, das exemplarisch als Balken, insbesondere Mittelbalken ausgeführt ist. Das Sollwert-Grafikelement 16 ist zweckmäßigerweise ein stationäres Referenzelement für das Abweichungs-Grafikelement. Zweckmäßigerweise ist das Sollwert-Grafikelement 16 in seiner Position und/oder Größe konstant. Das Sollwert-Grafikelement 16 zeigt insbesondere diejenige Position an, bei der der Istwert gleich dem Sollwert ist, also insbesondere diejenige Position, bei der der Abweichungswert gleich null ist. An dem Abstand des zweiten Endes des Balkens 6 von dem Sollwert-Grafikelement 16 lässt sich auf schnelle und einfache Weise die Abweichung zwischen dem Istwert und dem Sollwert ablesen. Je größer der Abstand des zweiten Endes des Balkens 6 von dem Sollwert-Grafikelement 16 ist und/oder je größer (in x-Richtung) der Balken 6 ist, umso größer ist die Abweichung zwischen dem Istwert und dem Sollwert. Bei einer Abweichung von null hat das Abweichungs-Grafikelement 5, insbesondere der Balken 6, zweckmäßigerweise eine Erstreckung, insbesondere eine x-Erstreckung von null, und wird dementsprechend nicht angezeigt.

Der Abweichungsindikator 3 umfasst zweckmäßigerweise ferner ein Bereichsanzeige-Grafikelement 17, das exemplarisch als eine sich in x-Richtung erstreckende Linie ausgeführt ist. Das Bereichsanzeige-Grafikelement 17 zeigt exemplarisch den maximalen Bereich an, innerhalb dem sich das Abweichungs-Grafikelement 5, insbesondere der Balken 6, befinden kann, insbesondere bei einem (betragsmäßig) maximalen Abweichungswert.

In der Figur 2 ist die Zustandsinformation 2 derart ausgerichtet, dass sich die Zahlenelemente in x-Richtung von links nach rechts lesen lassen. Die verschiedenen Elemente der Zustandsinformation 2 sind in "y-Richtung untereinander angeordnet. Exemplarisch ist im oberen y-Bereich der Anzeigeeinrichtung 1 das Istwert-Zahlenelement 11 angeordnet und in "y-Richtung darunter ist das Sollwert-Zahlenelement 9 angeordnet. In "y-Richtung unter dem Sollwert-Zahlenelement 9 ist exemplarisch der Abweichungsindikator 3 angeordnet. Der Abweichungsindikator 3 umfasst das Abweichungs-Zahlenelement 4 unter dem in "y-Richtung das Abweichungs-Grafikelement 5 und optional das Sollwert-Grafikelement 16 angeordnet sind. In y-Richtung unter dem Abweichungs-Grafikelement 5 ist optional das Bereichsanzeige-Grafikelement 17 angeordnet.

Nachstehend soll unter Bezugnahme auf die Figur 3 auf eine zweite exemplarische Ausgestaltung einer Ansicht, insbesondere der Hauptansicht, der Anzeigeeinrichtung 1 eingegangen werden.

Die zweite exemplarische Ausgestaltung ist zweckmäßigerweise bis auf die nachstehend erläuterten Unterschiede wie die vorstehend erläuterte erste exemplarische Ausgestaltung ausgeführt.

Bei der zweiten exemplarischen Ausgestaltung ist das Abweichungs-Grafikelement 5 exemplarisch als Marker 7 ausgebildet, dessen Position von dem Abweichungswert abhängt. Der Marker 7 hat exemplarisch die Form eines Dreiecks, insbesondere eines auf einem Eckpunkt stehenden Dreiecks. Alternativ kann der Marker 7 auch eine andere Form, beispielsweise die Form eines Rechtecks oder eines Kreises, aufweisen. Zweckmäßigerweise hängt die x-Position des Markers 7 von dem Abweichungswert ab. Wenn der Istwert gleich dem Sollwert ist, wird der Marker 7 exemplarisch mit der gleichen x-Position wie das Sollwert-Grafikelement 16 angezeigt. Wenn der Istwert kleiner als der Sollwert ist, wird der Marker 7 exemplarisch links von dem Sollwert-Grafikelement 16 angezeigt. Wenn der Istwert größer als der Sollwert ist, wird der Marker 7 exemplarisch rechts von dem Sollwert-Grafikelement 16 angezeigt.

Der Abweichungsindikator 3 umfasst exemplarisch eine Skala 15. Der Abweichungsindikator 3 umfasst ferner das Sollwert-Grafikelement 16, durch das der Sollwert als stationäre Referenz grafisch dargestellt wird. Das Sollwert-Grafikelement ist exemplarisch als Mittelbalken der Skala 15 ausgeführt.

Zweckmäßigerweise umfasst der Abweichungsindikator 3 einen oder mehrere als Grenzwert-Zahlenelemente und/oder als Grenzwert-Grafikelemente 18 dargestellte Grenzwerte für den Abweichungswert. In dem gezeigten Beispiel werden die Grenzwerte als Grenzwert-Grafikelemente 18 grafisch dargestellt. Die Grenzwert-Grafikelemente 18 sind exemplarisch als Seitenbalken ausgeführt, die sie zweckmäßigerweise links und rechts von dem Mittelbalken befinden. Exemplarisch stellen die Grenzwert-Grafikelemente 18 jeweils eine Abweichung von 1% des Maximaldrucks zum Sollwert dar.

Bei einem Abweichungswert, der außerhalb der durch die Grenzwert-Grafikelemente 18 repräsentierten Grenzwerte liegt, wird der Marker 7 zweckmäßigerweise auf oder bei dem entsprechenden Grenzwert-Grafikelement 18 dargestellt. Zweckmäßigerweise wird der Marker 7 nicht über die Grenzwert-Grafikelemente 18 hinaus bewegt. Der Marker 7 kann auch als Stift bezeichnet werden. Zweckmäßigerweise wechselt der Marker 7 oder ein anderer Teil der Skala 15 die Farbe, beispielsweise zu rot, insbesondere dann, wenn der Abweichungswert gleich einem Grenzwert ist und/oder außerhalb des durch die Grenzwerte definierten Bereichs liegt.

Optional umfasst der Abweichungsindikator 3 eine Skalenteilung 21. Zweckmäßigerweise ist die Vorrichtung 10, ausgebildet, die Skalenteilung 21 anzupassen, insbesondere dynamisch. Die Skalenteilung 21 umfasst exemplarisch mehrere Skalen-Balken, die sich insbesondere jeweils in "y-Richtung erstrecken.

Gemäß einer nicht gezeigten Ausgestaltung wird die Skala 15, die Skalenteilung 21 und/oder die Grenzwert-Grafikelemente 18 bei der in der Figur 2 gezeigten Ausgestaltung des Abweichungsindikators 3 eingesetzt.

Optional verfügt die Vorrichtung 10 über eine Einstellmöglichkeit, beispielsweise mittels der Bedieneinrichtung 19, um die Grenzwerte für den Abweichungswert individuell einstellen zu können. Die Einstellung ist insbesondere manuell mittels eines Menüs möglich. Alternativ oder zusätzlich dazu können die Grenzwerte bei der Fertigung der Vorrichtung 10 festgelegt werden, insbesondere gemäß einer Kundenspezifikation.

Optional verfügt die Vorrichtung über eine Datenschnittstelle, insbesondere eine IO-Link-Schnittstelle und/oder eine Bluetooth-Schnittstelle, über die die Grenzwerte insbesondere ferngesteuert geändert werden können, zweckmäßigerweise im Betrieb und/oder bei der Wartung. Die Datenschnittstelle kann zusätzlich zu der elektrischen Schnittstelle 24 bereitgestellt sein. Alternativ dazu kann die Datenschnittstelle auch durch die elektrische Schnittstelle 24 bereitgestellt werden.

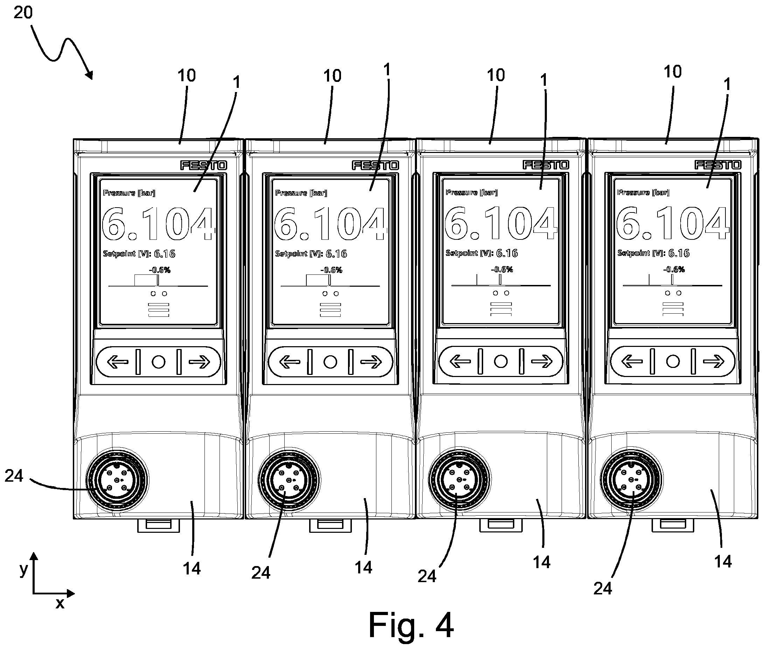

Die Figur 4 zeigt eine Reihenanordnung 20, die eine Mehrzahl von in einer Aufreihungsrichtung x aufgereihten, mechanisch und/oder fluidisch miteinander gekoppelten Vorrichtungen 10 umfasst. Die Vorrichtungen 10 liegen jeweils mit ihren Längsseiten aneinander an. Die Vorrichtungen 10 bilden zusammen einen im Wesentlichen quaderförmigen Körper. Die Außenkontur eines x-y-Schnitts durch die Reihenanordnung 20 ist exemplarisch rechteckig. Die Anzeigeeinrichtungen 1 liegen in x-Richtung nebeneinander. Exemplarisch zeigen mehrere, insbesondere sämtliche Vorrichtungen 10 einen jeweiligen Abweichungsindikator 3 an. Der Benutzer kann mit einem Blick erkennen, wie gut die durch die mehreren Vorrichtungen 10 bereitgestellten Regelungen funktionieren.

Nachstehend sollen weitere exemplarische Details erläutert werden.

Die Vorrichtung 10 umfasst als Ventileinheit insbesondere ein pneumatisches Proportionalventil. Die Vorrichtung 10 ist ausgebildet, mit dem Proportionalventil einen Istwert eines Drucks auf einen Sollwert zu regeln, der zweckmäßigerweise von einem Benutzer vorgegeben wird. Zweckmäßigerweise ist die Vorrichtung 10 ausgebildet, ein elektronisches Eingangssignal zu empfangen, das den Sollwert vorgibt, und das elektronische Eingangssignale mit dem pneumatischen Proportionalventil in einen korrespondierenden Druck als Istwert umzusetzen.

Zweckmäßigerweise ist die Vorrichtung 10 ausgebildet, die aktuelle Genauigkeit, insbesondere die aktuelle Abweichung zwischen dem Sollwert und dem Istwert, grafisch mittels der Anzeigeeinrichtung 1 darzustellen. Exemplarisch ist die Vorrichtung 10 ausgebildet, das Verhältnis zwischen dem Istwert des Drucks und dem maximal möglichen Druck nicht darzustellen, insbesondere nicht grafisch darzustellen.

Die Vorrichtung 10 ist ausgebildet, den Abweichungsindikator 3 auf der Anzeigeeinrichtung 1 darzustellen. Die Vorrichtung 10 ist insbesondere ausgebildet, den Abweichungsindikator 3 als Graph, insbesondere als Abweichungsgraph bereitzustellen Der Abweichungsgraph kann auch als Derivationsgraph bezeichnet werden. Der Graph stellt die Abweichung des momentanen Istwerts von dem gewünschten Sollwert dar. Zweckmäßigerweise stellt der Graph die Regelgüte der Druckregelung dar.

Mit Hilfe des Abweichungsindikators 3 kann ein Benutzer schnell und einfach visuell erfassen, wie gut die Regelung aktuell funktioniert. Der Benutzer kann sich folglich schnell und einfach über den aktuellen Zustand der Vorrichtung 10, insbesondere der Ventileinheit, informieren. Die Vorrichtung 10 ist insbesondere ausgebildet, den Abweichungsindikator 3 bei der Inbetriebnahme und/oder des Normalbetriebs der Vorrichtung 10 anzuzeigen. Durch den zusätzlich bereitgestellten Abweichungsindikator 3, der insbesondere die Regelgüte anzeigt, ergibt sich ein Mehrwert für den Benutzer, insbesondere bei der Inbetriebnahme und/oder dem Betrieb der Ventileinheit.

Für den Benutzer kann der Abweichungsindikator 3 - insbesondere die Information über die Regelgüte eines Proportionalventils innerhalb des geregelten Systems - hilfreicher sein als die konventionelle grafische Anzeige eines aktuellen Drucks in Relation zum maximal möglichen Druck. Beispielsweise bewirken Änderungen des Sollwerts kurzzeitige Phasen, in denen der von der Ventileinheit bereitgestellte Istwert außerhalb der gewünschten Genauigkeit liegt. Ebenso können Störungen auf der Ausgangsseite (z.B. Masseänderungen etc.) zu einer Abweichung zwischen dem Sollwert und dem Istwert führen. In diesen Fällen ändert sich meist der Istdruck nur geringfügig, so dass die (konventionelle) Anzeige des Istdrucks relativ zum Maximaldruck diese Phänomene nicht sichtbar macht. Durch die Bereitstellung des Abweichungsindikators 3 können diese Fälle jedoch schnell und einfach vom Benutzer erkannt werden, so dass dieser gegebenenfalls entsprechende Gegenmaßnahmen einleiten kann.

## Patentansprüche

1. Vorrichtung (10) für die Industrieautomatisierung, umfassend ein Gehäuse (14) und eine in dem Gehäuse (14) angeordnete Ventileinheit, die als pneumatisches Proportionalventil ausgebildet ist, sowie eine am Gehäuse (14) angeordnete Anzeigeeinrichtung (1) zur Anzeige einer Zustandsinformation (2) über die Ventileinheit, **dadurch gekennzeichnet, dass** die Vorrichtung (10) ausgebildet ist, auf Basis eines mit der Ventileinheit im Zusammenhang stehenden Sollwerts und eines mit der Ventileinheit im Zusammenhang stehenden Istwerts einen Abweichungswert bereitzustellen und gemäß dem Abweichungswert einen Abweichungsindikator (3) auf der Anzeigeeinrichtung (1) anzuzeigen, wobei

- der Abweichungsindikator (3) einen Balken (6) umfasst, dessen Größe von dem Abweichungswert abhängt, wobei sich der Balken (6) abhängig vom Vorzeichen des Abweichungswerts nach rechts oder nach links erstreckt, oder
- der Abweichungsindikator (3) ein Sollwert-Grafikelement (16) und ein als Marker (7) ausgebildetes Abweichungs-Grafikelement umfasst, wobei, wenn der Istwert kleiner ist als der Sollwert, der Marker (7) links von dem Sollwert-Grafikelement (16) angezeigt wird, und, wenn der Istwert größer als der Sollwert ist, der Marker (7) rechts von dem Sollwert-Grafikelement (16) angezeigt wird.

2. Vorrichtung (10) nach Anspruch 1, wobei der Abweichungsindikator (3) ein Abweichungs-Zahlenelement (4) umfasst und/oder die Größe, Farbe, Form und/oder Position des Abweichungs-Grafikelements (5) von dem Abweichungswert abhängt.

3. Vorrichtung (10) nach Anspruch 1 oder 2, wobei der Abweichungsindikator (3) einen Abweichungsgraphen umfasst.

4. Vorrichtung (10) nach einem voranstehenden Anspruch, wobei die Position des Markers (7) von dem Abweichungswert abhängt.

5. Vorrichtung (10) nach einem der voranstehenden Ansprüche, wobei die Zustandsinformation (2) den Sollwert als Sollwert-Zahlenelement (9) und/oder Sollwert-Grafikelement und/oder den Istwert als Istwert-Zahlenelement (11) und/oder Istwert-Grafikelement umfasst.

6. Vorrichtung (10) nach einem der voranstehenden Ansprüche, wobei der Abweichungsindikator (3) einen oder mehrere als Zahlenelemente und/oder als Grenzwert-Grafikelemente (18) dargestellte Grenzwerte für den Abweichungswert (12) umfasst.

7. Vorrichtung (10) nach einem der voranstehenden Ansprüche, wobei der Sollwert und/oder der Istwert einen Druck, Durchfluss, Hub und/oder eine Kraft betreffen.

8. Vorrichtung (10) nach einem der voranstehenden Ansprüche, wobei die Vorrichtung (10) ausgebildet ist, den Abweichungswert unter Berücksichtigung einer Differenz zwischen dem Sollwert und dem Istwert bereitzustellen.

9. Vorrichtung (10) nach einem der voranstehenden Ansprüche, wobei die Vorrichtung (10) ausgebildet ist, den Abweichungswert auf Basis eines Maximalwerts für den Sollwert und/oder Istwert bereitzustellen.

10. Vorrichtung (10) nach Anspruch 9, wobei die Vorrichtung (10) ausgebildet ist, den Abweichungswert als das Verhältnis der Differenz zwischen dem Sollwert und dem Istwert zu dem Maximalwert bereitzustellen.

11. Vorrichtung (10) nach einem voranstehenden Anspruch, wobei die Anzeigeeinrichtung (1) außen an dem Gehäuse (14) angeordnet ist.

12. Reihenanordnung (20) umfassend eine Mehrzahl von in einer Aufreihungsrichtung (x) aufgereihten, mechanisch und/oder fluidisch miteinander gekoppelten Vorrichtungen (10) nach einem der voranstehenden Ansprüche.

13. Reihenanordnung (20) nach Anspruch 12, wobei die Vorrichtungen (10) mit ihren Längsseiten aneinander anliegen und sämtliche Vorrichtungen (10) einen jeweiligen Abweichungsindikator (3) anzeigen.

14. Verfahren zum Betrieb einer Vorrichtung (10) nach einem der voranstehenden Ansprüche 1 bis 11, umfassend die Schritte:
Bereitstellen des Abweichungswerts auf Basis des mit der Ventileinheit im Zusammenhang stehenden Sollwerts und des mit der Ventileinheit im Zusammenhang stehenden Istwerts und Anzeigen, auf der Anzeigeeinrichtung (1), des Abweichungsindikators (3) gemäß dem Abweichungswert.

**Claims**

1. Device (10) for industrial automation, comprising a housing (14) and a valve unit arranged in the housing (14), which valve unit is designed as a pneumatic proportional valve, as well as a display device (1) arranged on the housing (14) for displaying status information (2) about the valve unit, **characterized in that** the device (10) is adapted to provide, on the basis of a setpoint value associated with the valve unit and an actual value associated with the valve unit, a deviation value and to display, according to the deviation value, a deviation indicator (3) on the display device (1), wherein

   - the deviation indicator (3) comprises a bar (6), whose size depends on the deviation value, wherein the bar (6) extends to the right or to the left depending on the sign of the deviation value, or
   - the deviation indicator (3) comprises a set point graphic element (16) and a deviation graphic element formed as a marker (7), wherein, if the actual value is less than the setpoint, the marker (7) is displayed to the left of the setpoint graphic element (16) and, if the actual value is greater than the setpoint, the marker (7) is displayed to the right of the setpoint graphic element (16).

2. Device (10) according to claim 1, wherein the deviation indicator (3) comprises a deviation number element (4) and/or the size, colour, shape and/or position of the deviation graphic element (5) depends on the deviation value.

3. Device (10) according to claim 1 or 2, wherein the deviation indicator (3) comprises a deviation graph.

4. Device (10) according to a preceding claim, wherein the position of the marker (7) depends on the deviation value.

5. Device (10) according to one of the preceding claims, wherein the status information (2) comprises the setpoint value as a setpoint value number element (9) and/or as a setpoint value graphic element and/or comprises the actual value as an actual value number element (11) and/or as an actual value graphic element (11).

6. Device (10) according to one of the preceding claims, wherein the deviation indicator (3) comprises one or more limit values for the deviation value (12) represented as number elements and/or as limit value graphic elements (18).

7. Device (10) according to one of the preceding claims, wherein the setpoint value and/or the actual value concern a pressure, flow, stroke and/or a force.

8. Device (10) according to one of the preceding claims, wherein the device (10) is adapted to provide the deviation value taking into account a difference between the setpoint value and the actual value.

9. Device (10) according to one of the preceding claims, wherein the device (10) is adapted to provide the deviation value on the basis of a maximum value for the setpoint value and/or actual value.

10. Device (10) according to claim 9, wherein the device (10) is adapted to provide the deviation value as the ratio of the difference between the setpoint value and the actual value to the maximum value.

11. Device (10) according to a preceding claim, wherein the display device (1) is arranged outside on the housing (14).

12. Row arrangement (20) comprising a plurality of mechanically and/or fluidically coupled devices (10) according to one of the preceding claims, wherein the devices (10) are arranged in a row in a row direction (x).

13. Row arrangement (20) according to claim 12, wherein the devices (10) abut each other with their long sides and all devices (10) display a respective deviation indicator (3).

14. Method of operating a device (10) according to one of the preceding claims 1 to 11, comprising the steps:

   providing the deviation value based on the setpoint value associated with the valve unit and the actual value associated with the valve unit, and
   displaying, on the display device (1), the deviation indicator (3) according to the deviation value.

**Revendications**

1. Dispositif (10) pour l'automatisation industrielle, comprenant un boîtier (14) et une unité de soupape agencée dans le boîtier (14) qui est réalisée en tant que soupape proportionnelle pneumatique, ainsi qu'un dispositif d'affichage (1) agencé au niveau du boîtier (14) pour l'affichage d'une information d'état (2) sur l'unité de soupape, **caractérisé en ce que** le dispositif (10) est réalisé afin de fournir une valeur d'écart sur la base d'une valeur de consigne se trouvant en rapport avec l'unité de soupape et d'une valeur réelle se trouvant en rapport avec l'unité de soupape et d'afficher selon la valeur d'écart un indicateur d'écart (3) sur le dispositif d'affichage (1), dans lequel

   - l'indicateur d'écart (3) comporte une barre (6), dont la grandeur dépend de la valeur d'écart, dans lequel la barre (6) s'étend vers la droite ou vers la gauche en fonction du signe de la valeur d'écart, ou
   - l'indicateur d'écart (3) comporte un élément graphique de valeur de consigne (16) et un élément graphique d'écart réalisé en tant que marqueur (7), dans lequel, lorsque la valeur réelle est inférieure à la valeur de consigne, le marqueur (7) est affiché à gauche de l'élément graphique de valeur de consigne (16), et, lorsque la valeur réelle est supérieure à la valeur de consigne, le marqueur (7) est affiché à droite de l'élément graphique de valeur de consigne (16).

2. Dispositif (10) selon la revendication 1, dans lequel l'indicateur d'écart (3) comporte un élément chiffré d'écart (4) et/ou la grandeur, la couleur, la forme et/ou la position de l'élément graphique d'écart (5) dépend de la valeur d'écart.

3. Dispositif (10) selon la revendication 1 ou 2, dans lequel l'indicateur d'écart (3) comporte un graphe d'écart.

4. Dispositif (10) selon une revendication précédente, dans lequel la position du marqueur (7) dépend de la valeur d'écart.

5. Dispositif (10) selon l'une quelconque des revendications précédentes, dans lequel l'information d'état (2) comporte la valeur de consigne en tant qu'élément chiffré de valeur de consigne (9) et/ou élément graphique de valeur de consigne et/ou la valeur réelle en tant qu'élément chiffré de valeur réelle (11) et/ou élément graphique de valeur réelle.

6. Dispositif (10) selon l'une quelconque des revendications précédentes, dans lequel l'indicateur d'écart (3) comporte une ou plusieurs valeurs limites représentées en tant qu'éléments chiffrés et/ou en tant qu'éléments graphiques de valeur limite (18) pour la valeur d'écart (12).

7. Dispositif (10) selon l'une quelconque des revendications précédentes, dans lequel la valeur de consigne et/ou la valeur réelle concerne une pression, un débit, un levage et/ou une force.

8. Dispositif (10) selon l'une quelconque des revendications précédentes, dans lequel le dispositif (10) est réalisé afin de fournir la valeur d'écart en tenant compte d'une différence entre la valeur de consigne et la valeur réelle.

9. Dispositif (10) selon l'une quelconque des revendications précédentes, dans lequel le dispositif (10) est réalisé afin de fournir la valeur d'écart sur la base d'une valeur maximale pour la valeur de consigne et/ou la valeur réelle.

10. Dispositif (10) selon la revendication 9, dans lequel le dispositif (10) est réalisé afin de fournir la valeur d'écart en tant que le rapport de la différence entre la valeur de consigne et la valeur réelle à la valeur maximale.

11. Dispositif (10) selon l'une quelconque des revendications précédentes, dans lequel le dispositif d'affichage (1) est agencé à l'extérieur sur le boîtier (14).

12. Agencement en série (20) comprenant une pluralité de dispositifs (10) juxtaposés dans un sens de juxtaposition (x), couplés mécaniquement et/ou fluidiquement les uns aux autres selon l'une quelconque des revendications précédentes.

13. Agencement en série (20) selon la revendication 12, dans lequel les dispositifs (10) reposent les uns contre les autres avec leurs côtés longitudinaux et tous les dispositifs (10) affichent un indicateur d'écart (3) respectif.

14. Procédé de fonctionnement d'un dispositif (10) selon l'une quelconque des revendications précédentes 1 à 11, comprenant les étapes suivantes :

la fourniture de la valeur d'écart sur la base de la valeur de consigne se trouvant en rapport avec l'unité de soupape et de la valeur réelle se trouvant en rapport avec l'unité de soupape et

l'affichage, sur le dispositif d'affichage (1), de l'indicateur d'écart (3) selon la valeur d'écart.

Fig. 1

1

Pressure [bar]

6.104

2, 11

2, 9

2, 3

Setpoint [V]: 6.16

2, 3, 4

2, 3, 16

2, 3, 5, 6

-0.6%

2, 3, 17

y

x

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 29721502 U1
- EP 1988369 A1
- US 20090122831 A1
- US 3643682 A